# EUROPEAN PATENT SPECIFICATION

(11) **EP 4 046 823 B1**
(45) Date of publication and mention of the grant of the patent: **01.11.2023**
(21) Application number: 22156211.9
(22) Date of filing: 10.02.2022
(51) Int. Cl.: B60C 7/14

(54) **AIRLESS TIRE**
LUFTLOSER REIFEN
PNEU SANS AIR

(30) Priority: 18.02.2021 JP 2021024583
(43) Date of publication of application: 24.08.2022
(73) Proprietor: Sumitomo Rubber Industries, Ltd., Kobe-shi, Hyogo-ken 651-0072 (JP)
(72) Inventor: YAMANE, Masakatsu, Kobe-shi, 651-0072 (JP)
(74) Representative: Manitz Finsterwald Patent- und Rechtsanwaltspartnerschaft mbB

(56) References cited:
- WO-A1-2010/007636
- WO-A1-2014/148824
- WO-A1-2018/207460
- WO-A1-2020/121937
- JP-A- 2015 116 868
- US-A1- 2011 290 394
- US-A1- 2017 136 814
- US-A1- 2019 283 495
- US-A1- 2020 207 150

## Description

### BACKGROUND OF THE INVENTION

### Field of the Invention

The present invention relates to an airless tire that can support a load by its own structure without using high-pressure air.

### Background Art

Conventionally, various airless tires in which a tread ring and a hub are connected by spokes have been known. For example, JP 2016-130071 A proposes an airless tire that suppresses damage to spoke plate portions, of a spoke, formed in an S-shape, by specifying the thicknesses of the spoke plate portions.

JP 2015-116868 A discloses an airless tire according to the preamble of claim 1. The airless tire has a tread ring, a hub to be fixed to an axle, and a spoke assembly for connecting the hub and the tread ring. The tread ring has an inner circumferential surface to which a reinforcement layer is attached and which is recessed outward in the tire radial direction. The inner circumferential surface has a concave shape.

However, in the airless tire of JP 2016-130071 A, an adhesion portion between the tread ring and the spoke has a cylindrical shape that is straight in a tire meridional cross-section, and when large lateral force is applied during sharp cornering or the like, shearing force may occur in the adhesion portion, causing separation at the adhesion portion.

The present invention has been made in view of the above circumstances, and a main object of the present invention is to provide an airless tire that can suppress separation between a tread ring and a spoke even when large lateral force is applied thereto, to improve durability.

### SUMMARY OF THE INVENTION

The present invention is directed to an airless tire including: a tread ring having a ground-contact surface; a hub disposed inward of the tread ring in a tire radial direction and to be fixed to an axle; and a spoke assembly for connecting the tread ring and the hub, wherein the tread ring has an inner circumferential surface facing an inner side in the tire radial direction, a recess is formed on the inner circumferential surface so as to be recessed outward in the tire radial direction beyond a reference straight line connecting both ends in a tire axial direction of the inner circumferential surface in a tire meridional cross-section, the recess is formed over the entire range in the tire axial direction of the inner circumferential surface, and a recessed amount in the tire radial direction of the recess is the largest at a center position in the tire axial direction. The maximum recessed amount in the tire radial direction of the recess is not greater than 3.0 mm, and the recessed amount in the tire radial direction of the recess is varied in a tire circumferential direction.

In the airless tire according to the present invention, preferably, a maximum recessed amount in the tire radial direction of the recess is not less than 0.5 mm.

In the airless tire according to the present invention, preferably, the recess is curved in an arc shape in the tire meridional cross-section.

In the airless tire according to the present invention, preferably, the recess has a single radius of curvature in the tire meridional cross-section.

In the airless tire according to the present invention, preferably, the spoke assembly has an outer cylindrical portion having an outer circumferential surface connected to the inner circumferential surface of the tread ring, and a projection having a shape corresponding to the recess in the tire meridional cross-section is formed on the outer circumferential surface of the outer cylindrical portion.

In the airless tire according to the present invention, the tread ring has an inner circumferential surface facing the inner side in the tire radial direction, and a recess is formed on the inner circumferential surface so as to be recessed outward in the tire radial direction beyond a reference straight line connecting both ends in the tire axial direction of the inner circumferential surface in the tire meridional cross-section. In such an airless tire, even when large lateral force is applied to the tread ring, the recess can distribute shearing force, so that separation at an adhesion surface between the tread ring and the spoke can be suppressed.

In the airless tire according to the present invention, the recess is formed over the entire range in the tire axial direction of the inner circumferential surface. Such a tread ring can distribute strain occurring when lateral force is applied thereto, in the entire range in the tire axial direction, and can also suppress stress concentration due to a shape change. Thus, the durability of the airless tire can be improved. Therefore, the airless tire according to the present invention can suppress separation between the tread ring and the spoke even when large lateral force is applied thereto, to improve durability.

### BRIEF DESCRIPTION OF THE DRAWINGS

FIG. 1 is a perspective view showing an embodiment of the airless tire according to the present invention;
FIG. 2 is a side view of the airless tire;
FIG. 3 is a cross-sectional view taken along a line A-A in FIG. 2;
FIG. 4 is an end view of a spoke plate as viewed in the direction of a spoke width; and
FIG. 5 is a cross-sectional view taken along a line B-B in FIG. 2.

### DETAILED DESCRIPTION

Hereinafter, an embodiment of the present invention will be described in detail with reference to the drawings.

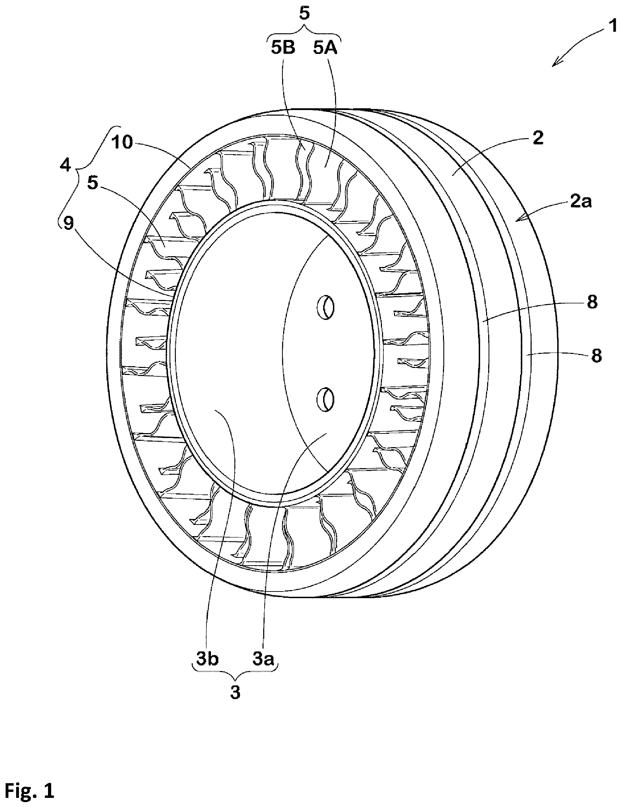

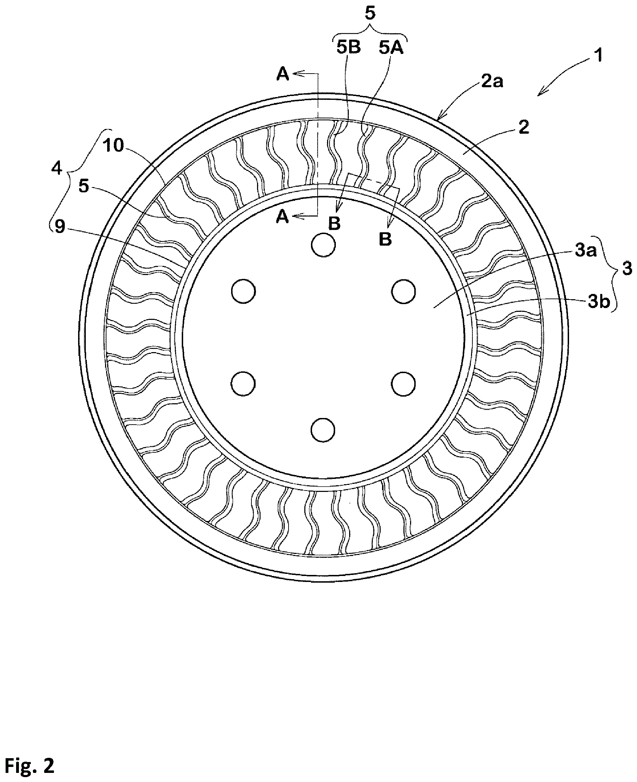

FIG. 1 is a perspective view showing an airless tire 1 according to the present embodiment, and FIG. 2 is a side view of the airless tire 1. As shown in FIG. 1 and FIG. 2, the airless tire 1 according to the present embodiment includes a tread ring 2 having a ground-contact surface 2a, a hub 3 disposed inward of the tread ring 2 in the tire radial direction, and a spoke 4 for connecting the tread ring 2 and the hub 3.

The hub 3 preferably includes a fixed portion 3a which is fixed to an axle (not shown) of a vehicle. Such an airless tire 1 can support a load applied to the tread ring 2, by the hub 3 and the spoke 4 without using high-pressure air. Therefore, the airless tire 1 according to the present embodiment has no risk of a puncture.

The spoke 4 of the present embodiment includes a plurality of spoke plates 5 provided so as to be spaced apart from each other in the tire circumferential direction. Each spoke plate 5 is formed, for example, in a plate shape in which the width in the tire axial direction thereof is larger than the thickness in the tire circumferential direction thereof. In such a spoke 4, when a load is applied to the tread ring 2, tensile force is applied to the spoke plates 5 that are located above the hub 3, and compressive force is applied to the spoke plates 5 that are located below the hub 3, whereby the spoke 4 can support the load.

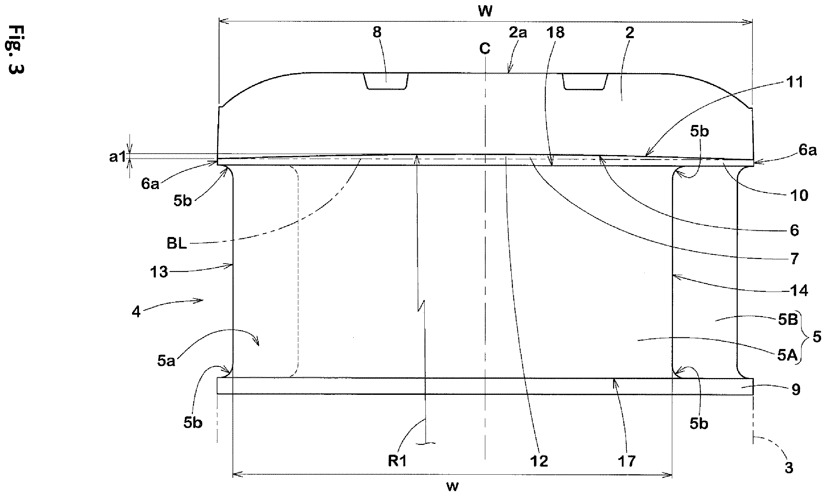

FIG. 3 is a cross-sectional view taken along a line A-A in FIG. 2. As shown in FIG. 3, the tread ring 2 of the present embodiment has an inner circumferential surface 6 facing the inner side in the tire radial direction. On the inner circumferential surface 6 of the present embodiment, a recess 7 is formed so as to be recessed outward in the tire radial direction beyond a reference straight line BL connecting both ends 6a in the tire axial direction of the inner circumferential surface 6 in a tire meridional cross-section.

In such an airless tire 1, even when large lateral force is applied to the tread ring 2, the recess 7 can distribute shearing force, so that separation at an adhesion surface between the tread ring 2 and the spoke 4 can be suppressed.

The recess 7 of the present embodiment is formed over the entire range in the tire axial direction of the inner circumferential surface 6. Such a tread ring 2 can distribute strain occurring when lateral force is applied thereto, in the entire range in the tire axial direction, and can also suppress stress concentration due to a shape change of the inner circumferential surface 6. Thus , the durability of the airless tire 1 can be improved. Therefore, the airless tire 1 according to the present embodiment can suppress separation between the tread ring 2 and the spoke 4 even when large lateral force is applied thereto, to improve durability.

According to the present invention a recessed amount a1 in the tire radial direction of the recess 7 is the largest at a center position C in the tire axial direction. For lateral forces in both directions, such a recess 7 can distribute shearing force, and can improve durability of the airless tire 1. Here, the center position C is the center position in the tire axial direction of a width W of the tread ring 2, and is also referred to as a tire equator.

The maximum recessed amount a1 in the tire radial direction of the recess 7 is preferably not less than 0.5 mm. When the maximum recessed amount a1 is not less than 0.5 mm, shearing force can be reliably distributed, and the durability of the airless tire 1 can be improved. From such a viewpoint, the maximum recessed amount a1 is more preferably not less than 0.7 mm and further preferably not less than 1.0 mm.

According to the present invention the maximum recessed amount a1 in the tire radial direction of the recess 7 is not greater than 3.0 mm. When the maximum recessed amount a1 is not greater than 3.0 mm, excessive strain of the tread ring 2 due to the recess 7 when compressive force is applied to the spoke plates 5 can be suppressed, and the durability of the airless tire 1 can be improved. From such a viewpoint, the maximum recessed amount a1 is more preferably not greater than 2.7 mm and further preferably not greater than 2.5 mm.

The recess 7 of the present embodiment is curved in an arc shape in the tire meridional cross-section. Such a recess 7 can reliably suppress stress concentration due to a shape change of the inner circumferential surface 6, and can further improve the durability of the airless tire 1.

The recess 7 preferably has a single radius of curvature R1 in the tire meridional cross-section. Such a recess 7 can further reliably suppress stress concentration due to a shape change of the inner circumferential surface 6, and can further improve the durability of the airless tire 1.

The recessed amount a1 in the tire radial direction of the recess 7 of the present embodiment is uniform in the tire circumferential direction. Such a tread ring 2 has no change in thickness in the tire circumferential direction and can suppress occurrence of vibration and noise.

According to the present invention the recessed amount a1 in the tire radial direction of the recess 7 is varied in the tire circumferential direction. In this case, in the airless tire 1, even when large front-rear force is applied to the tread ring 2, the recess 7 can distribute shearing force, so that separation at the adhesion surface between the tread ring 2 and the spoke 4 can be more reliably suppressed.

As shown in FIG. 1 and FIG. 3, the tread ring 2 is formed of, for example, an elastic body such as rubber in a substantially cylindrical shape. For example, a reinforcing layer or a rubber layer which is not shown may be provided inside the tread ring 2. The tread ring 2 preferably has a plurality of grooves 8 formed on the ground-contact surface 2a which comes into contact with a road surface during running. The ground-contact surface 2a is not limited to such a mode, and, for example, the ground-contact surface 2a may have a block shape, or a plurality of recesses may be formed thereon.

The ground-contact surface 2a of the present embodiment includes a profile parallel to the reference straight line BL in the tire meridional cross-section. Such a ground-contact surface 2a has good grip performance and can improve the steering stability of the airless tire 1. The ground-contact surface 2a is not limited to such a mode, and may include, for example, a profile parallel to the inner circumferential surface 6.

As shown in FIG. 1 and FIG. 2, the hub 3 is formed of, for example, an inelastic body such as metal. The hub 3 preferably includes the disk-shaped fixed portion 3a which is fixed to an axle, and a cylindrical portion 3c which is connected to the spoke 4. The fixed portion 3a of the hub 3 has, for example, a plurality of fixing holes formed therein. The fixed portion 3a of the hub 3 is not limited to such a mode, and may be, for example, attachable to a dedicated axle through one-touch operation.

The spoke 4 is formed from, for example, a polymer material having elasticity. The polymer material is preferably selected from a single elastomer, a composite elastomer containing two or more elastomers, and a fiber-containing elastomer. Such a spoke 4 has excellent balance between weight reduction, flexibility, and strength, and serves to improve the low fuel consumption performance, the ride comfort, and the durability of the airless tire 1 in a well-balanced manner.

The spoke 4 of the present embodiment includes the plurality of spoke plates 5, an inner cylindrical portion 9 which is connected to the hub 3, and an outer cylindrical portion 10 which is connected to the tread ring 2. Accordingly, each spoke plate 5 is indirectly connected to the tread ring 2 and the hub 3. Such a spoke 4 can be firmly connected to the hub 3 and the tread ring 2 and can improve the durability of the airless tire 1.

As shown in FIG. 3, an outer circumferential surface 11 of the outer cylindrical portion 10 is preferably adhered to the inner circumferential surface 6 of the tread ring 2. A projection 12 having a shape corresponding to the recess 7 in the tire meridional cross-section is formed on the outer circumferential surface 11 of the outer cylindrical portion 10 of the present embodiment. At such an outer cylindrical portion 10, the projection 12 can be combined with the recess 7 of the tread ring 2, so that even when large lateral force is applied to the tread ring 2, separation at the adhesion surface between the tread ring 2 and the spoke 4 can be suppressed.

Each spoke plate 5 of the present embodiment has a first end portion 13 which extends in the tire radial direction on one end side in the tire axial direction, and a second end portion 14 which extends in the tire radial direction on the other end side in the tire axial direction. Accordingly, each spoke plate 5 of the present embodiment has a spoke width w measured along a surface 5a of the spoke plate 5 from the first end portion 13 to the second end portion 14 at the same position in the tire radial direction.

The spoke width w of each spoke plate 5 is preferably smaller than the width W of the tread ring 2. Such a spoke plate 5 serves to achieve weight reduction and can improve the low fuel consumption performance of the airless tire 1.

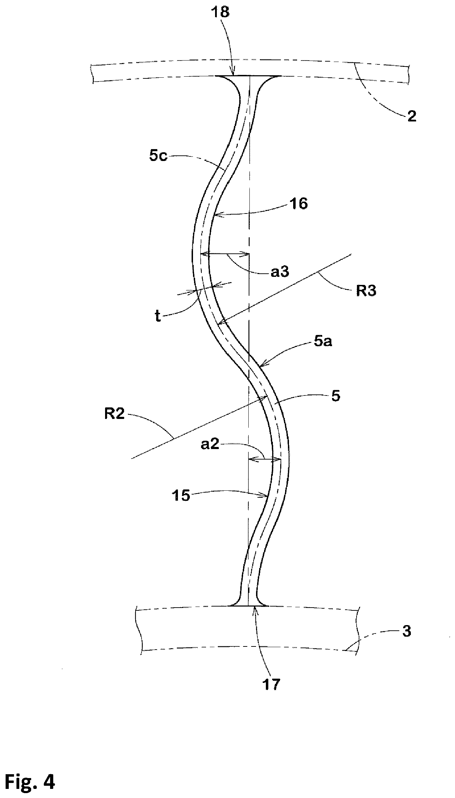

FIG. 4 is an end view of the spoke plate 5 as viewed in the direction of the spoke width w. As shown in FIG. 3 and FIG. 4, each spoke plate 5 of the present embodiment has a spoke thickness t orthogonal to the spoke width w and the surface 5a of the spoke plate 5.

Each spoke plate 5 of the present embodiment includes a first curved portion 15 which is curved so as to project to one side in the tire circumferential direction on the hub 3 side, and a second curved portion 16 which is curved so as to project to the other side in the tire circumferential direction on the tread ring 2 side, as viewed in the direction of the spoke width w. Such a spoke plate 5 can improve the ride comfort of the airless tire 1 by the first curved portion 15 and the second curved portion 16.

An amplitude a2 of the first curved portion 15 and an amplitude a3 of the second curved portion 16 of the present embodiment are different from each other. Such a spoke plate 5 can limit the direction of deformation occurring when large compressive force is applied to the spoke plate 5, such as when passing through a step, to the side where a curved portion having a larger amplitude, out of the first curved portion 15 and the second curved portion 16, is present. Accordingly, even when passing through a step, the spoke 4 can suppress contact between the spoke plates 5 adjacent to each other in the tire circumferential direction due to deformation.

The amplitude a3 of the second curved portion 16 is preferably larger than the amplitude a2 of the first curved portion 15. The amplitude a3 of the second curved portion 16 of the present embodiment is larger than the amplitude a2 of the first curved portion 15 by 1 to 3 mm. Such a spoke plate 5 has a good vibration absorbing effect by increasing the deformation of the second curved portion 16 which is located on the outer side in the tire radial direction, and can improve the ride comfort of the airless tire 1.

The amplitude a2 of the first curved portion 15 of the present embodiment is uniform in the entire range of the spoke width w. In addition, the amplitude a3 of the second curved portion 16 of the present embodiment is uniform in the entire range of the spoke width w. Such a spoke plate 5 can distribute strain occurring when compressive force is applied thereto, in the direction of the spoke width w, and can further improve the durability of the airless tire 1.

A radius of curvature R2 of the first curved portion 15 and a radius of curvature R3 of the second curved portion 16 are preferably equal to each other. Such a spoke plate 5 can limit the direction of deformation occurring when compressive force is applied thereto, to the direction based on amplitude. In addition, the spoke plate 5 can distribute strain occurring when compressive force is applied thereto, to the first curved portion 15 and the second curved portion 16, and can further improve the durability of the airless tire 1. Here, the radius of curvature R2 of the first curved portion 15 and the radius of curvature R3 of the second curved portion 16 are each a radius of curvature of a center line 5c of the spoke thickness t.

As shown in FIG. 3, each spoke plate 5 of the present embodiment includes an inner end portion 17 which is an end portion on the hub 3 side, and an outer end portion 18 which is an end portion on the tread ring 2 side. In the spoke plate 5, for example, the inner end portion 17 is integrally formed with the inner cylindrical portion 9 via curved surface portions 5b. In addition, in the spoke plate 5, for example, the outer end portion 18 is integrally formed with the outer cylindrical portion 10 via curved surface portions 5b.

As shown in FIG. 4, the center line 5c of the spoke thickness t in the inner end portion 17 of the present embodiment extends so as to be parallel to the tire radial direction. The center line 5c of the spoke thickness t in the outer end portion 18 of the present embodiment also extends so as to be parallel to the tire radial direction, similar to that in the inner end portion 17. Such a spoke plate 5 can reduce strain occurring when tensile force is applied thereto, and can further improve the durability of the airless tire 1.

The center line 5c of the spoke thickness t in the inner end portion 17 and the center line 5c of the spoke thickness t in the outer end portion 18 are preferably located on the same straight line as viewed in the direction of the spoke width w. Such a spoke plate 5 can limit the direction of deformation occurring when compressive force is applied thereto, to the direction based on amplitude. In addition, such a spoke plate 5 can reduce strain occurring when compressive force is applied thereto, and can further improve the durability of the airless tire 1.

As shown in FIG. 1 and FIG. 3, the spoke plates 5 of the present embodiment include first spoke plates 5A which are disposed on one side in the tire axial direction, and second spoke plates 5B which are disposed on the other side in the tire axial direction. The first spoke plates 5A and the second spoke plates 5B are, for example, alternately disposed in the tire circumferential direction. Such spoke plates 5 can achieve both weight reduction and balance in the tire axial direction, and can achieve both desired low fuel consumption performance and desired steering stability of the airless tire 1.

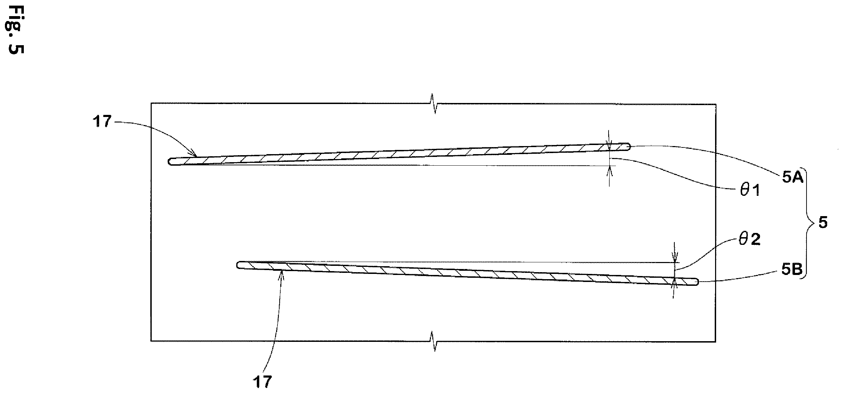

FIG. 5 is a cross-sectional view taken along a line B-B in FIG. 2. As shown in FIG. 5, the inner end portion 17 of the present embodiment extends so as to be inclined relative to the tire axial direction. In addition, although not shown, the outer end portion 18 preferably extends so as to be inclined relative to the tire axial direction in the same direction as the inner end portion 17.

Inclination angles of the inner end portion 17 and the outer end portion 18 with respect to the tire axial direction are preferably 2 to 10°. When the inclination angles are not less than 2°, the stiffness in the tire circumferential direction can be improved, and the durability of the airless tire 1 can be improved. When the inclination angles are not greater than 10°, excessive stiffness in the tire circumferential direction can be suppressed, and the ride comfort of the airless tire 1 can be improved.

The inner end portion 17 of each first spoke plate 5A and the inner end portion 17 of each second spoke plate 5B are preferably inclined relative to the tire axial direction in directions opposite to each other. Such a spoke 4 has good balance in the tire axial direction and can improve the ride comfort of the airless tire 1.

An angle θ1 of the inner end portion 17 of each first spoke plate 5A with respect to the tire axial direction and an angle θ2 of the inner end portion 17 of each second spoke plate 5B with respect to the tire axial direction are preferably equal to each other. Such a spoke 4 has good balance in the tire axial direction and can improve the ride comfort of the airless tire 1. The angle θ1 of the inner end portion 17 of each first spoke plate 5A with respect to the tire axial direction and the angle θ2 of each inner end portion 17 of the second spoke plate 5B with respect to the tire axial direction may be, for example, different from each other.

Although the particularly preferred embodiments of the present invention have been described in detail above, the present invention is not limited to the above-described embodiments, and various modifications can be made to implement the present invention, the scope of which is defined by the appended claims.

### EXAMPLES

Airless tires having the basic structure in FIG. 1 to FIG. 5 were produced as test tires on the basis of specifications in Table 1, and were tested for durability. The main common specifications and the test method are as follows.

### <Common Specifications>

Tread ring width: 165 mm
Tread ring outer diameter: 502 mm
Tread ring inner diameter: 489 mm
Hub outer diameter: 304 mm
Number of spoke plates: 20 pairs
Inclination angle of each spoke plate end portion: 2°

### <Durability>

Using a drum tester, each tire was caused to run under the conditions of a load of 3.8 kN, a speed of 60 km/h, and a slip angle of 1.5°, and the running distance was measured until the running became impossible due to separation between the tread ring and the spoke or breakage of the tread ring. The results are indexes with the result of a comparative example being regarded as 100. A higher value indicates that the running distance is longer and that the durability is better.

The results of the test are shown in Table 1.

**[Table 1]**

| | Comp. Ex. | Ex. 1 | Ex. 2 | Ex. 3 | Ex. 4 | Ex. 5 |
|---|---|---|---|---|---|---|
| Recessed amount a1 (mm) | 0.0 | 0.5 | 1.0 | 2.0 | 3.0 | 4.0 |
| Durability (index) | 100 | 105 | 110 | 120 | 115 | 105 |

As a result of the test, it is confirmed that the airless tire of each Example has a smaller degree of rubbing and has improved durability as compared to the comparative example.

## Claims

1. An airless tire (1) comprising:
a tread ring (2) having a ground-contact surface (2a);
a hub (3) disposed inward of the tread ring (2) in a tire radial direction and to be fixed to an axle; and
a spoke assembly (4) for connecting the tread ring (2) and the hub (3), wherein
the tread ring (2) has an inner circumferential surface (6) facing an inner side in the tire radial direction,
a recess (7) is formed on the inner circumferential surface (6) so as to be recessed outward in the tire radial direction beyond a reference straight line (BL) connecting both ends (6a) in a tire axial direction of the inner circumferential surface (6) in a tire meridional cross-section,
the recess (7) is formed over the entire range in the tire axial direction of the inner circumferential surface (6), and
a recessed amount (a1) in the tire radial direction of the recess (7) is the largest at a center position (C) in the tire axial direction,
**characterized in that** the maximum recessed amount (a1) in the tire radial direction of the recess (7) is not greater than 3.0 mm and the recessed amount (a1) in the tire radial direction of the recess (7) is varied in a tire circumferential direction.

2. The airless tire (1) according to claim 1, wherein a maximum recessed amount (a1) in the tire radial direction of the recess (7) is not less than 0.5 mm.

3. The airless tire (1) according to claim 1 or 2, wherein the recess (7) is curved in an arc shape in the tire meridional cross-section.

4. The airless tire (1) according to claim 3, wherein the recess (7) has a single radius of curvature (R1) in the tire meridional cross-section.

5. The airless tire (1) according to any one of claims 1 to 4, wherein
the spoke assembly (4) has an outer cylindrical portion (10) having an outer circumferential surface (11) connected to the inner circumferential surface (6) of the tread ring (2), and
a projection (12) having a shape corresponding to the recess (7) in the tire meridional cross-section is formed on the outer circumferential surface (11) of the outer cylindrical portion (10).

## Patentansprüche

1. Luftloser Reifen (1), umfassend:
einen Laufflächenring (2), der eine Bodenkontaktfläche (2a) aufweist;
eine Nabe (3), die in einer Reifenradialrichtung innen von dem Laufflächenring (2) angeordnet und an einer Achse zu befestigen ist; und
eine Speichenbaugruppe (4) zum Verbinden des Laufflächenrings (2) und der Nabe (3), wobei
der Laufflächenring (2) eine Innenumfangsfläche (6) aufweist, in der Reifenradialrichtung nach innen weist,
eine Vertiefung (7) an der Innenumfangsfläche (6) so ausgebildet ist, dass sie in der Reifenradialrichtung über eine Bezugsgerade (BL), die beide Enden (6a) in einer Reifenaxialrichtung der Innenumfangsfläche (6) in einem Reifenmeridionalquerschnitt verbindet, hinaus nach außen vertieft ist,
die Vertiefung (7) über den gesamten Bereich in der Reifenaxialrichtung der Innenumfangsfläche (6) ausgebildet ist, und
ein Vertiefungsbetrag (a1) in der Reifenradialrichtung der Vertiefung (7) in einer mittleren Position (C) in der Reifenaxialrichtung am größten ist,
**dadurch gekennzeichnet, dass** der maximale Vertiefungsbetrag (a1) in der Reifenradialrichtung der Vertiefung (7) nicht größer als 3,0 mm ist und der Vertiefungsbetrag (a1) in der Reifenradialrichtung der Vertiefung (7) in einer Reifenumfangsrichtung variiert ist.

2. Luftloser Reifen (1) nach Anspruch 1, wobei ein maximaler Vertiefungsbetrag (a1) in der Reifenradialrichtung der Vertiefung (7) nicht weniger als 0,5 mm beträgt.

3. Luftloser Reifen (1) nach Anspruch 1 oder 2, wobei die Vertiefung (7) im Reifenmeridionalquerschnitt in einer Bogenform gekrümmt ist.

4. Luftloser Reifen (1) nach Anspruch 3, wobei die Vertiefung (7) im Reifenmeridionalquerschnitt einen einzigen Krümmungsradius (R1) aufweist.

5. Luftloser Reifen (1) nach einem der Ansprüche 1 bis 4, wobei
die Speichenbaugruppe (4) einen äußeren zylindrischen Abschnitt (10) mit einer Außenumfangsfläche (11) aufweist, die mit der Innenumfangsfläche (6) des Laufflächenrings (2) verbunden ist, und
ein Vorsprung (12), der eine Form aufweist, die der Vertiefung (7) im Reifenmeridionalquerschnitt entspricht, an der Außenumfangsfläche (11) des äußeren zylindrischen Abschnitts (10) ausgebildet ist.

## Revendications

1. Bandage sans air (1) comprenant :
un anneau formant bande de roulement (2) ayant une surface de contact au sol (2a) ;
un moyeu (3) disposé à l'intérieur de l'anneau formant bande de roulement (2) dans une direction radiale du bandage et devant être fixé à un axe ; et
un assemblage de rayons (4) destinés à connecter l'anneau formant bande de roulement (2) et le moyeu (3), dans lequel
l'anneau formant bande de roulement (2) a une surface circonférentielle intérieure (6) tournée vers un côté intérieur dans la direction radiale du bandage,
un évidement (7) est formé sur la surface circonférentielle intérieure (6) de manière à être évidé vers l'extérieur dans la direction radiale du bandage au-delà d'une ligne droite de référence (BL) connectant les deux extrémités (6a) dans une direction axiale du bandage de la surface circonférentielle intérieure (6) dans une section transversale méridienne du bandage,
l'évidement (7) est formé sur la zone entière dans la direction axiale du bandage de la surface circonférentielle intérieure (6), et
une quantité évidée (a1), dans la direction radiale du bandage, de l'évidement (7) est la plus grande à une position centrale (C) dans la direction axiale du bandage,
**caractérisé en ce que**
la quantité évidée maximum (a1), dans la direction radiale du bandage, de l'évidement (7) n'est pas supérieure à 3,0 mm et la quantité évidée (a1), dans la direction radiale du bandage, de l'évidement (7) varie dans une direction circonférentielle du bandage.

2. Bandage sans air (1) selon la revendication 1, dans lequel une quantité évidée maximum (a1), dans la direction radiale du bandage, de l'évidement (7) n'est pas inférieure à 0,5 mm.

3. Bandage sans air (1) selon la revendication 1 ou 2, dans lequel l'évidement (7) est incurvé dans une forme d'arc dans la direction transversale méridienne du bandage.

4. Bandage sans air (1) selon la revendication 3, dans lequel l'évidement (7) a un rayon de courbure unique (R1) dans la direction transversale méridienne du bandage.

5. Bandage sans air (1) selon l'une quelconque des revendications 1 à 4, dans lequel
l'assemblage de rayons (4) a une portion cylindrique extérieure (10) qui a une surface circonférentielle extérieure (11) connectée à la surface circonférentielle intérieure (6) de l'anneau formant bande de roulement (2), et
une projection (12) ayant une forme correspondant à l'évidement (7) dans la section transversale méridienne du bandage est formée sur la surface circonférentielle extérieure (11) de la portion cylindrique extérieure (10).
